# EUROPÄISCHE PATENTANMELDUNG

(11) **EP 2 978 062 A1**
(43) Veröffentlichungstag der Anmeldung: **27.01.2016**
(21) Anmeldenummer: 15173976.0
(22) Anmeldetag: 26.06.2015
(51) Int. Cl.: H01M 10/42, H01M 10/48, H01M 2/36, H01M 2/02, H01M 10/04, H01M 2/34

(54) **BATTERIEZELLE**

(30) Priorität: 23.07.2014 DE 102014214337
(71) Anmelder: ROBERT BOSCH GMBH, 70442 Stuttgart (DE)
(72) Erfinder: Klemen, Thomas, 74360 Ilsfeld / Auenstein (DE); Seyed Abbassi, Seyed Mohammad, 75175 Pforzheim (DE); Riefler, Michael, 72768 Reutlingen (DE)

(57) **Zusammenfassung**

Die vorliegende Erfindung betrifft eine Batteriezelle (10), aufweisend ein Zellgehäuse (18), welches Zellgehäuse (18) einen Zellraum (23) zum Aufnehmen einer elektrochemischen Zelleinheit (12) begrenzt, wobei die Batteriezelle (10) in dem Zellraum (23) ein Isolationselement (60) aufweist oder wobei das Zellgehäuse (18) eine mit einem Verschlusselement (56) verschlossene Einfüllöffnung (33) zum Einfüllen eines flüssigen Elektrolyten aufweist, wobei ein Funktionselement (58) zum Steuern oder Überwachen der Batteriezelle (10) in dem Verschlusselement (56) oder in dem Isolationselement (60) angeordnet ist. Zusammenfassend ermöglicht es die vorbeschriebene Batteriezelle (10) auf kostengünstige Weise unter nicht oder zumindest nicht wesentlicher Reduzierung der Kapazität eine besonders vorteilhafte Überwachung und Steuerung und damit eine verbesserte Leistungsfähigkeit der Batteriezelle (10) zu ermöglichen.

## Beschreibung

Die vorliegende Erfindung betrifft eine Batteriezelle, wie beispielsweise eine Lithium-Ionen-Zelle. Die vorliegende Erfindung betrifft insbesondere eine Batteriezelle mit einer verbesserten Funktionalität.

### Stand der Technik

Batterien, wie beispielsweise Lithium-Ionen-Batterien, sind in vielen täglichen Anwendungen weit verbreitet. Sie werden beispielsweise in Computern, wie etwa Laptops, Mobiltelefonen, Smartphones und bei anderen Anwendungen eingesetzt. Auch bei der zur Zeit stark vorangetriebenen Elektrifizierung von Fahrzeugen, wie etwa Kraftfahrzeugen, bieten derartige Batterien Vorteile.

Lithium-Ionen-Batterien, welche etwa in Fahrzeuganwendungen zum Einsatz kommen, weisen oftmals aufgrund des Volumennutzwertes eine prismatische Form auf. Im Inneren des Gehäuses befindet sich dann ein flach gepresster Wickel, der entsprechende Elektrodenfolien aufweisen kann. Insbesondere bei derartigen elektrochemischen Energiespeichern ist das Einbringen von Funktionselementen oftmals schwierig.

Aus dem Dokument WO 2012/1215468 A1 ist ein elektrochemischer Energiespeicher bekannt, welcher eine zylindrische Form aufweist und dabei an seiner oberen Seite einen Elektrodenanschluss aufweist. Dabei ist in dem Elektrodenanschluss ein Thermistor angeordnet, um so laut diesem Dokument das Herstellungsverfahren zu vereinfachen.

### Offenbarung der Erfindung

Gegenstand der vorliegenden Erfindung ist eine Batteriezelle, aufweisend ein Zellgehäuse, welches Zellgehäuse einen Zellraum zum Aufnehmen einer elektrochemischen Zelleinheit begrenzt, wobei die Batteriezelle in dem Zellraum ein Isolationselement aufweist oder wobei das Zellgehäuse eine mit einem Verschlusselement verschlossene Einfüllöffnung zum Einfüllen eines flüssigen Elektrolyten aufweist, wobei wenigstens ein Funktionselement zum Steuern oder Überwachen der Batteriezelle in dem Verschlusselement oder in dem Isolationselement angeordnet ist.

Eine vorbeschriebene Batteriezelle erlaubt eine verbesserte Funktionalität, insbesondere mit Bezug auf ihre Überwachung und/oder ihre Steuerung.

Eine Batterie kann dabei im Sinne der vorliegenden Erfindung eine Primärbatterie oder in vorteilhafter Weise eine Sekundärbatterie, wie insbesondere ein wieder aufladbarer Akkumulator, sein. Beispielsweise kann eine Batterie eine lithiumbasierte Batterie, beispielsweise eine Lithium-Ionen-Batterie beziehungsweise ein Lithium-Ionen-Akkumulator, sein. Somit kann eine Batteriezelle entsprechend beispielsweise eine Lithium-Ionen-Zelle sein.

Eine derartige Batteriezelle weist ein Zellgehäuse auf. Das Zellgehäuse kann beispielsweise aus einem Kunststoff oder aus Metall ausgestaltet sein, wie dies für Zellgehäuse grundsätzlich bekannt ist.

Das Zellgehäuse begrenzt dabei einen Zellraum zum Aufnehmen einer elektrochemischen Zelleinheit, in welchem Zellraum eine oder eine Mehrzahl von Zelleinheiten angeordnet ist. Somit kann nur eine Zelleinheit vorgesehen sein oder in vorteilhafter Weise kann eine Mehrzahl an Zelleinheiten vorgesehen sein. Die eine oder die Mehrzahl an Zelleinheiten können dabei in einer prismatischen Form ausgestaltet sein. In diesem Fall kann sich in dem Inneren des Gehäuses ein auch als Wicklungselement bezeichneter flach gepresster Wickel befinden, der beispielsweise eine Aluminiumfolie und eine Kupferfolie aufweist, welche mit reaktiven Kathodenmaterialien beziehungsweise Anodenmaterialien beschichtet ist. Weiterhin können zwei etwa als Diaphragmen ausgestaltete Kunststofffolien vorgesehen sein, welche die Anode und die Kathode trennen. Grundsätzlich kann unter einer Zelleinheit eine Anordnung aufweisend eine Kathode, eine Anode und einen Separator verstanden werden. Insbesondere durch das Vorsehen eines Wicklungselements kann das in dem Zellgehäuse vorliegende Volumen optimal ausgenutzt werden und somit eine hohe volumenspezifische Kapazität erzielt werden.

Um ein elektrisches Kontaktieren der Kathode beziehungsweise der Anode der Zelleinheit wie beispielsweise des als Folienwickel ausgestalteten Wicklungselements zu realisieren, können beispielsweise die beiden als Kathode beziehungsweise als Anode ausgestalteten Folien nicht passgenau aneinander gelegt werden, sondern in Richtung der Wickelachse leicht versetzt werden. Dadurch lässt sich an einer offenen Schmalseite des Wicklungselements die negative Spannung, an der anderen, gegenüberliegenden Schmalseite, die positive Spannung der jeweiligen Folie beziehungsweise Elektrode abgreifen. Die Kontaktierung kann beispielsweise mit überstehenden Folienstreifen mit angeschweißten streifenförmigen Blechstreifen, etwa aus den entsprechenden Folienmaterialien, den so genannten Stromkollektoren realisiert werden. Dabei kann die Zelleinheit beziehungsweise können die Zelleinheiten durch die Stromkollektoren wiederum mit einem elektrischen Kontakt, wie etwa einem Anschlussbolzen, verbunden sein. Somit kann unter einem Stromkollektor insbesondere ein derartiges Bauteil verstanden werden, welches unterschiedliche Batteriezellen oder unterschiedliche Bereiche einer Batteriezelle einer gemeinsamen Polung miteinander verbindet oder an einem Bereich einer Batteriezelle angeschlossen sein kann, um so eine beispielsweise gemeinsame Ableitung oder Zuleitung von elektrischem Strom zu ermöglichen. Der elektrische Kontakt beziehungsweise der Anschlussbolzen kann dabei durch das Gehäuse verlaufen oder als reiner äußerer Kontakt der Elektroden dienen.

Um einen Kurzschluss im Inneren des Zellgehäuses zu verhindern und um somit ein fehlerfreies Arbeiten der Batteriezelle zu ermöglichen, ist in dem Inneren des Zellgehäuses ein Isolationselement beziehungsweise ist vorteilhaft eine Mehrzahl an Isolationselementen vorgesehen. Diese Isolationselemente können beispielsweise und nicht beschränkend dazu dienen, die Stromabnehmern beziehungsweise Stromkollektoren oder weitere stromführende Teile beispielsweise und nicht beschränkend von dem Gehäuse, welches metallisch ausgestaltet sein kann, zu isolieren.

Das Zellgehäuse kann beispielsweise einen Gehäusegrundkörper aufweisen. Der Gehäusegrundkörper kann beispielsweise wannenartig ausgestaltet sein und dabei beispielsweise einen Wandbereich und einen Bodenbereich aufweisen. Dabei kann der Gehäusegrundkörper einstückig oder mehrstückig ausgestaltet sein, ohne den Rahmen der Erfindung zu verlassen. Unabhängig von der konkreten Form des Gehäusegrundkörpers kann dieser eine Gehäuseöffnung aufweisen, die durch einen Gehäusedeckel verschließbar ist. Dadurch kann ein besonders einfaches Herstellen der Batteriezelle ermöglicht werden, da die aktiven Batteriekomponenten wie etwa die Zelleinheit auf einfache Weise in das Zellgehäuse beziehungsweise den Gehäusegrundkörper eingefügt werden können, woraufhin das Zellgehäuse durch Befestigen des Gehäusedeckels an der Gehäuseöffnung beziehungsweise an dem Gehäusegrundkörper verschlossen werden kann.

Bei einem Herstellen einer derartigen Batteriezelle kann das Zellgehäuse nach dem Einbringen der Zelleinheit, wie beispielsweise des Zellwickels beziehungsweise des Wicklungselements und insbesondere nach einem Verschließen des Gehäusegrundkörpers mit dem Gehäusedeckel mit einem flüssigen Elektrolyt befüllt werden. Dies kann etwa durch eine verschließbare Öffnung realisierbar sein, die lediglich eine Größe in einem Bereich von kleiner als 10mm, beispielsweise 5mm oder weniger, zu haben braucht, und durch ein geeignetes Verschlusselement verschlossen werden kann. In für den Fachmann verständlicher Weise ist die Position der Einfüllöffnung jedoch nicht auf die vorbeschriebene Position beschränkt. Grundsätzlich kann ein Verschließen einer derartigen Einfüllöffnung realisiert werden durch das Verwenden von Nieten, insbesondere eingeschweißten Befüllstopfen oder durch ein Verpressen.

Um ein besonders vorteilhaftes Überwachen und/oder Steuern der Batteriezelle zu ermöglichen, ist es vorgesehen, dass ein Funktionselement zum Steuern oder Überwachen der Batterie in dem Verschlusselement oder in dem Isolationselement angeordnet ist. Dabei kann im Sinne der vorliegenden Erfindung nur eines von dem vorbeschriebenen Isolationselement und dem Verschlusselement vorliegen, oder es können beide vorgenannten Bauteile vorliegen, ohne den Rahmen der Erfindung zu verlassen. Ferner wird die Erfindung im Weiteren grundsätzlich unter Verwendung eines Funktionselements beschrieben, wobei von der vorliegenden Erfindung mit umfasst ist das Vorsehen einer Mehrzahl an gleichen oder verschiedenen Funktionselementen, welche je nach Bedarf positioniert sein können. Ferner ist von der Erfindung umfasst ein Funktionselement, welches die Batteriezelle Überwachen, Steuern oder Überwachen und Steuern kann. Diese Ausgestaltung ermöglicht es in besonders vorteilhafter Weise, die Batteriezelle zu überwachen beziehungsweise zu steuern.

Im Detail bietet die vorbeschriebene Positionierung eines Funktionselements oder mehrerer Funktionselemente eine besonders vorteilhafte Lösung der Integration eines derartigen Bauteils in eine Batteriezelle. Dies ermöglicht das Ausbilden einer besonders vorteilhaft zu überwachenden beziehungsweise zu steuernden Batteriezelle, die auch als Smart-Cell beziehungsweise Safe-Cell bezeichnet werden kann. Das zu integrierende Funktionselement bildet durch die Möglichkeit der Zustandsabfrage, der Steuerbarkeit und/oder der Schaltbarkeit der Batteriezelle die Basis dafür, eine eigensichere Zelle herzustellen, also eine derartige Zelle, welche die für eine Überwachung beziehungsweise Steuerung notwendigen Bauteile zumindest teilweise selbst umfasst. Eine derartige Batteriezelle kann somit einen großen eigenen Beitrag eines Schutzes vor nicht gewünschter Überladung bieten oder beispielsweise eine Früherkennung für Schadensfälle, die sich anbahnen, erlauben. Ein weiterer Vorteil ist die Möglichkeit einer unmittelbaren Linderung eines Schadensfalles, der nicht mehr aufzuhalten ist.

Dabei kann das Funktionselement beziehungsweise können die Funktionselemente an den entsprechenden Positionen insbesondere mechanisch verankert und abgedichtet sein. Dies kann beispielsweise in Form einer Glas- oder einer Kunststoffdichtung realisiert werden, die dem Fachmann grundsätzlich bekannt sind. Weiterhin ist es möglich, das Funktionselement durch ein Schweißverfahren stoffschlüssig mechanisch zu verankern und abzudichten.

Bezüglich einer Anbindung des Funktionselements an das Verschlusselement kann dieses etwa mittels Laserschweißen, Umformen, wie etwa Nieten oder Verkleben mit dem Verschlusselement verbunden sein, wobei entsprechende Verbindungstechniken anwendbar sind, um das Verschlusselement an dem Gehäuse zu fixieren.

Bezüglich einer Anbindung des Funktionselements an ein Isolationselement kann etwa eine Einbindung in das entsprechende insbesondere aus Kunststoff geformte Bauteil während der Herstellung des Isolationselements erfolgen, wie dies nachstehend beispielhaft erläutert wird.

Durch die Positionierung des Funktionselements wie vorstehend beschrieben kann dies in eine bereits vorhandene und bei Batteriezellen oftmals ohnehin notwendige Komponente integriert werden. Dies hat den Vorteil, dass kein weiteres Bauteil benötigt wird, um eine mechanische Befestigung beziehungsweise Positionierung zu erzielen. Dadurch kann die Herstellung der Batteriezelle besonders einfach und kostengünstig ermöglicht werden.

Darüber hinaus können die Anforderungen an die Funktionselemente bezüglich einer Medienbeständigkeit, beispielsweise bezüglich des Elektrolyten, und einer Dichtheit geringer sein, da das Funktionselement durch das Verschlusselement oder das Isolationselement abgedeckt und somit geschützt sein kann.

Ein weiterer wesentlicher Vorteil bietet sich dadurch, dass für die Integration des Funktionselements kein oder nur ein äußerst geringer weiterer Bauraum innerhalb der Batteriezelle benötigt wird. Somit ist es nicht notwendig, die Zelleinheit zu verkleinern, um Raum für die Integration des Funktionselements zu schaffen. Die Kapazität der Batteriezelle wird somit vorzugsweise auch bei dem Integrieren einer Mehrzahl von Funktionselementen in die Batteriezellen nicht negativ beeinflusst oder eine derartige Beeinflussung kann zumindest sehr gering gehalten werden. Beispielsweise kann die Größe des Verschlusselements auf Kosten des Gehäuses vergrößert werden, so dass Raum für das Funktionselement problemlos geschaffen werden kann. Daher kann auf besonders vorteilhafte Weise eine Verbesserung der Sicherheit und/oder der Leistungsfähigkeit der Batteriezelle ermöglicht werden.

Weiterhin bietet die vorbeschriebene Lösung den Vorteil, dass das Risiko einer Beschädigung oder Zerstörung des Funktionselements bei der Montage minimiert wird. Dadurch kann bei der Herstellung ein Ausschuss an defekten Batteriezellen minimiert werden, was die Herstellungskosten der Batteriezelle weiter verringert. Bezüglich einer Integration des Funktionselements in den Verschlussstopfen kann dies dadurch erreicht werden, dass das Funktionselement erst im letzten Montageschritt bei dem Herstellen der Batteriezelle verbaut wird. Bezüglich einer Integration des Funktionselements in ein Isolationselement kann das Isolationselement, welches oftmals aus einem elastischen Material, wie etwa Ethylen-Propylen-Dien-Kautschuk (EPDM), geformt sein kann oder starr sein kann, dass Funktionselement schützen. Ferner kann insbesondere durch das Isolationselement eine besonders einfache Abdichtung gegenüber beispielsweise dem Elektrolyt ermöglicht werden.

Als weiterer Vorteil der vorbeschriebenen Ausgestaltung sei erwähnt, dass es besonders einfach und problemlos möglich ist, eine Verbindung der Datenabgriffe von oder zu dem Funktionselement zu ermöglichen. Bezüglich einer Positionierung des Funktionselements in dem Verschlusselement gilt dies, da eine etwaige Verbindung, wie beispielsweise ein Stecker beziehungsweise ein Kabel, problemlos von außen an das Verschlusselement führbar ist und somit an das Funktionselement angeschlossen werden kann. Somit kann der weitere Aufbau der Batteriezelle im Wesentlichen unbeeinflusst bleiben. Bezüglich der Positionierung in einem Isolationselement kann dieser Vorteil dadurch erreicht werden, dass eine Positionierung in dieser Ausgestaltung nah an dem Zellgehäuse besonders einfach möglich ist. Somit kann auch ein Spannungsabgriff, sowie Funktionen des Funktionselements beispielsweise über eine Verbindung zum positiven Pol und der Konfiguration, wonach ein negatives Potential auf dem Zellgehäuse liegt, durch Durchleitungen realisiert werden.

Weiterhin kann es insbesondere bei einer Positionierung des Funktionselements in dem Isolationselement möglich werden, die Positionierung des Funktionselements in Nähe zu der Zelleinheit, wie etwa dem Wicklungselement, zu realisieren, so dass beispielsweise eine Temperaturmessung oder eine sonstige Überwachung oder Steuerung der Batteriezelle besonders vorteilhaft genau dort möglich ist, wo sie von Interesse ist beziehungsweise besonders wirksam ist.

Erfindungsgemäß kann somit ein Vorteil erzielt werden mit Bezug auf eine einfache Integration in bestehende Bauteile, welche in Batteriezellen benötigt werden. Dies kann insbesondere fertigungstechnische Vorteile mit sich bringen, da eine Integration oftmals unmittelbar in das Herstellungsverfahren integriert werden kann. Nicht mehr nötig ist es dabei, wie es aus dem Stand der Technik bekannt ist, eine zusätzliche Versieglung und damit unerwünschte Prozessstufen durchzuführen.

Zusammenfassend ermöglicht es die vorbeschriebene Batteriezelle auf kostengünstige Weise unter nicht oder zumindest nicht wesentlicher Reduzierung der Kapazität eine besonders vorteilhafte Überwachung und Steuerung und damit eine verbesserte Leistungsfähigkeit der Batteriezelle zu ermöglichen.

Im Rahmen einer Ausgestaltung kann das Funktionselement wenigstens eines von einem Steuerbauteil, einem Sensor und einem Aktor aufweisen. Insbesondere durch die vorbeschriebenen Funktionselemente kann ein vorteilhaftes Überwachen und Steuern der Batteriezelle ermöglicht werden. Dabei kann in für den Fachmann verständlicher Weise lediglich eins der vorgenannten Funktionselemente vorgesehen sein, oder es kann eine Kombination von zwei oder mehreren der vorbeschriebenen Funktionselemente vorgesehen sein, wobei die Auswahl der Anzahl und der Art der vorgesehenen Funktionselemente jeweils für den konkreten Einzelfall angepasst werden kann. Insbesondere kann jeweils mindestens eines der vorgenannten Funktionselemente vorgesehen sein, so dass durch ein Erfassen und Verarbeiten von Betriebsparametern und einen Steuereingriff eine besonders vorteilhafte und direkte Steuerung möglich ist.

Im Rahmen einer weiteren Ausgestaltung kann der Sensor ausgewählt sein aus einem Sensor zum Detektieren von Temperatur, Druck, Kraft und Beschleunigung. Insbesondere die vorbeschriebenen Sensoren sind dabei von Vorteil, um ein umfassendes Überwachen der Batteriezelle beziehungsweise des Arbeitens der Batteriezelle zu ermöglichen. Durch einen Temperatursensor, beispielsweise, kann auf einen sich anbahnenden Fehlerfall geschlossen werden, wenn beispielsweise die Temperatur über einen definierten Grenzwert steigt. Somit kann die Temperatur als sicherer Indikator dienen, ob die Batteriezelle vorschriftsmäßig arbeitet. Ein Drucksensor kann ebenfalls anzeigen, ob beispielsweise aufgrund eines Fehlerfalls der Druck im Inneren der Zelle steigt, so dass auch dieser Sensor gut dazu geeignet ist, beispielsweise bei einem Fehlerfall entsprechenden Gegenmaßnahmen einleiten zu können. Ein Kraftsensor beispielsweise kann ferner beispielhaft Verformungen anzeigen und somit beispielsweise bei dem Betrieb der Batteriezelle in einem elektrisch angetriebenen Fahrzeug bei einem Unfall dafür Sorge tragen, dass die Batteriezelle von dem Stromnetz getrennt wird und somit die von der Batteriezelle ausgehende Gefährdung reduziert wird. Gleiches gilt für einen Beschleunigungssensor, der ebenfalls auf einen Unfall hinweisen kann wodurch etwa die vorbeschriebenen Sicherheitsmaßnahmen eingeleitet werden können. Dabei sind die vorbeschriebenen Maßnahmen jedoch nur Beispielhaft und in keiner Weise beschränkend zu verstehen.

Dabei kann es bezüglich des Sensors vorgesehen sein, dass, etwa für den Fall, dass das Funktionselement in dem Verschlusselement angeordnet ist, dieses metallisch, beispielsweise aus Aluminium ausgebildet ist. Ferner kann das Verschlusselement wie auch das Isolationselement über eine mechanische Trennmembran verfügen, die den Druck an das Sensorelement übergibt. Die Temperatur kann beispielsweise über das Sensorgehäuse oder das Isolationselement, welches stoffschlüssig mit dem Zellgehäuse verbunden sein kann, abgegriffen werden.

Im Rahmen einer weiteren Ausgestaltung kann das Steuerbauteil zum Steuern der Betriebsweise der Batteriezelle ausgestaltet sein. Insbesondere in dieser Ausgestaltung kann die Batteriezelle eine vollständig autarke Überwachung und Steuerung der Funktionsweise ermöglichen, so dass auf zusätzliche Steuersysteme in einer Ausgestaltung verzichtet werden kann. Ein Ausgestalten zum Steuern der Betriebsweise der Batteriezelle kann dabei insbesondere bedeuten, dass wenigstens ein Betriebsparameter der Batteriezelle durch einen Steuereingriff des Steuerbauteils einstellbar sein kann. Beispielsweise kann eine Optimierung der Alterung der Zellen durch ein intelligentes Zu- und Abschalten von Zellen im Modul erreicht werden, oder kann eine oder eine Mehrzahl an Batteriezellen von einem Verbraucher getrennt werden, etwa bei dem Vorliegen eines Fehlerfalls. Dies kann insbesondere dann von Vorteil sein, wenn eine Mehrzahl von Funktionselementen vorgesehen ist und diese beispielsweise neben der Steuereinheit einen Sensor und einen Aktor aufweisen. Diese Ausgestaltung ist dabei insbesondere für portable Systeme von Vorteil.

Im Rahmen einer weiteren Ausgestaltung kann der Aktor einen Schalter aufweisen. Beispielsweise kann der Aktor ein Schalter sein, der eine elektrische Verbindung herstellen oder unterbrechen kann. Als solcher kann der Schalter beispielsweise ein Überladen verhindern und somit Bestandteil einer Sicherheitseinrichtung sein, die auch als overcharge safety device bezeichnet wird. Weiterhin kann der Schalter einen spezifischen Widerstand durch das Kombinieren verschiedener Querschnitte und Materialen einstellen, was zu einer langsamen Entladung der Zelle führen kann, oder kann eine oder eine Mherzahl von Batteriezellen von einem Verbraucher trennen. Der Aktor braucht hier an der vorbeschriebenen Position lediglich die Schaltfunktion ausüben insbesondere dann, wenn entsprechende Leitungen zu dem Aktor beziehungsweise zu dem Schalter geführt sind. Das Einstellen beispielsweise eines spezifischen Widerstandes, wie vorher beschrieben, kann auch innerhalb oder außerhalb der Zelle untergebracht werden. Grundsätzlich kann der Aktor somit derart ausgestaltet sein, um einen gewünschten Steuerungseingriff in die Batteriezelle, welcher von einer Steuereinheit, insbesondere einem Funktionselement, gegeben wurde, zu ermöglichen.

Im Rahmen einer weiteren Ausgestaltung kann das Funktionselement fixiert beziehungsweise angeordnet sein durch ein Spritzgussverfahren. Dabei kann das Funktionselement beispielsweise zumindest teilweise ein einem Isolationselement aus Kunststoff angeordnet oder vollständig in diesem eingeschlossen sein. Insbesondere aber nicht beschränkend mit Bezug auf das Isoliergehäuse, insbesondere auf die vergleichsweise kurzen Seitenflächen der prismatischen Zelle, bietet sich eine vorteilhafte Möglichkeit, die Funktionselemente in die vorstehenden Bauteile zu integrieren. Dabei können die entsprechenden Funktionselemente in die Spritzgussform eingelegt und so problemlos integriert beziehungsweise zumindest teilwiese umspritzt werden.

Im Rahmen einer weiteren Ausgestaltung kann das Funktionselement in dem Verschlusselement oder in dem Isolationselement fixiert sein durch eine Schweißverbindung oder durch eine Rastverbindung, wie insbesondere unter Ausbildung einer Schnappverbindung oder einer Clipverbindung. Insbesondere die vorgenannten Befestigungsverfahren können in besonders in vorteilhafter Weise dazu dienen, das Funktionselement sicher und gegebenenfalls lösbar zu positionieren. Dabei kann insbesondere durch die vorgenannten Befestigungsverfahren ein einfacher Herstellungsprozess ermöglicht werden, wobei es ferner möglich wird, das Funktionselement als getrenntes Bauteil herzustellen und auf einfache Weise in die Batteriezelle zu integrieren.

Im Rahmen einer weiteren Ausgestaltung kann das Funktionselement durch ein Kabel oder kabellos mit einer insbesondere außerhalb des Zellgehäuses angeordneten Steuereinheit verbunden sein. Insbesondere in dieser Ausgestaltung kann somit die Steuereinheit, welche beispielsweise das Batterie-Management-System sein kann, beispielhaft die von einem Sensor als Funktionselement gelieferten Daten auswerten und in Antwort auf die gelieferten Daten gegebenenfalls einen Steuereingriff, etwa unter Zuhilfenahme eines Aktors als weiteres Funktionselement, durchführen. Es kann jedoch ferner vorgesehen sein, dass die Steuereinheit nur mit einem Funktionselement, wie beispielsweise einen Sensor oder einen Aktor, verbunden ist, und die weiteren Funktionselemente wie aus dem Stand der Technik bekannt angeordnete Funktionselemente sind.

Im Rahmen einer weiteren Ausgestaltung kann das Isolationselement eine Gehäuseisolierung für das Zellgehäuse sein. In dieser Ausgestaltung kann das beispielsweise als Isolationsgehäuse ausgestaltete Isolationselement die Zelleinheit, wie beispielsweise das Wicklungselement zusätzlich mechanisch bei der Montage schützen und isolieren. Dabei kann das Isolationselement beispielsweise einen an einem Wandbereich des Zellgehäuses und/oder an einem Bodenbereich des Zellgehäuses angeordneten Bereich aufweisen. Die Positionierung des Funktionselements innerhalb des Isolationselements kann dabei innerhalb der Zelle, je nach funktionaler Lage, ausgewählt werden. Das zu integrierenden Funktionselement ist somit beispielsweise vor dem Elektrolyt geschützt, isoliert und in dem Isolationselement beispielsweise mechanisch befestigt. Auch bei einer derartigen Positionierung bietet sich der Vorteil, dass kein Bauraum innerhalb des Zellgehäuses verloren geht, und somit die Kapazität der Batteriezelle erhalten bleiben kann. Weiterhin werden keine weiteren Bauteile für eine Anordnung des Funktionselements benötigt, was einen Kostenvorteil mit sich bringen kann. Darüber hinaus bietet eine Positionierung des Funktionselements insbesondere in dieser Ausgestaltung den weiteren Vorteil, dass das Funktionselement räumlich dicht an dem Zellgehäuse angeordnet sein kann. Dadurch ist der Aufwand für eine externe Kontaktierung des Funktionselements, beispielsweise durch einen Anschluss oder ein Kabel durch das Gehäuse, etwa um eine Verbindung zu einer Steuereinheit herzustellen, besonders einfach möglich.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Darstellung eines Aufbaus einer Batteriezelle;
- Fig. 2: eine schematische Ansicht eines Teilbereichs einer Ausgestaltung einer Batteriezelle gemäß der Erfindung;
- Fig. 3: eine schematische Schnittansicht der Ausgestaltung aus Figur 2;
- Fig. 4: eine weitere zu der Schnittansicht aus Figur 3 verdrehte schematische Schnittansicht der Ausgestaltung aus Figur 2;
- Fig. 5: eine schematische Ansicht eines Isolationselements mit einem Funktionselement für eine Batteriezelle gemäß der Erfindung;
- Fig. 6: eine Ansicht eines Teils einer Ausgestaltung einer Batteriezelle mit einem Isolationselement gemäß Figur 5; und
- Fig. 7: eine schematische geschnittene Darstellung der Ausgestaltung aus Figur 6.

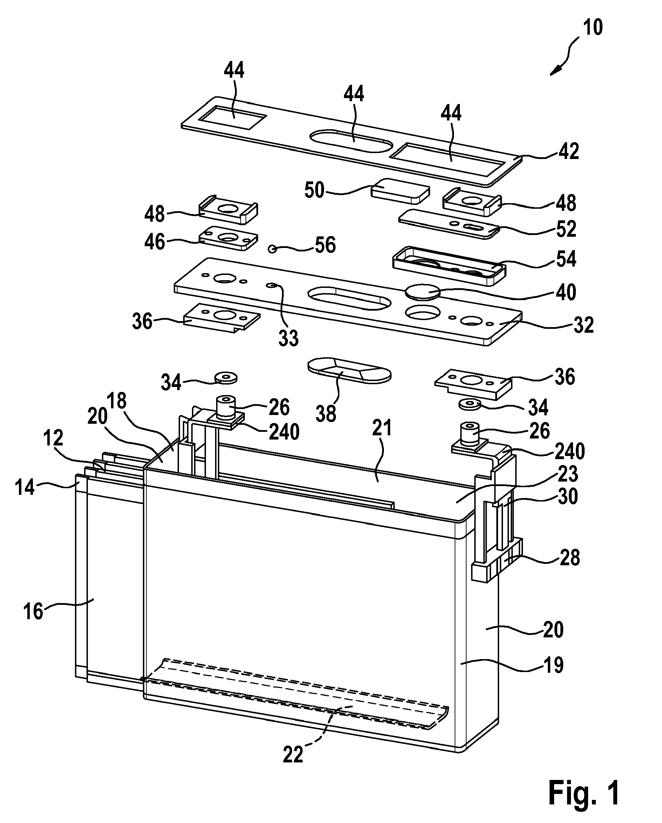

In Figur 1 ist ein teilweiser beispielhafter und nicht beschränkender Aufbau einer Batteriezelle 10 gezeigt. Die Batteriezelle 10 ist dabei gemäß Figur 1 insbesondere eine Lithium-Ionen-Zelle, welche in einer prismatischen Form ausgestaltet ist. Die Batteriezelle 10 weist daher in der Ausgestaltung gemäß Figur 1 eine als Wicklungselement ausgestaltetes Zelleinheit 12 auf, bei welcher eine mit Anodenmaterial beschichtete Kupferfolie, eine mit Kathodenmaterial beschichtet Aluminiumfolie und beispielsweise zwei Kunststofffolien, die als Separatoren beziehungsweise Diaphragmen dienen, übereinander gelegt beziehungsweise gewickelt und flach gepresst sind. Zur elektrischen Kontaktierung werden die Kupferfolie und die Aluminiumfolie entlang der Wicklungsachse dabei in entgegengesetzter Richtung leicht versetzt eingelegt. Damit stehen die Kupferfolie auf der einen Schmalseite und die Aluminiumfolie auf der anderen Schmalseite über. Die so entstehenden überstehenden Folienstreifen 14 dienen dabei zur elektrischen Kontaktierung von Anode beziehungsweise Kathode. Dabei sind der Übersichtlichkeit halber lediglich die überstehenden Folienstreifen 14 eines Pols gezeigt. In für den Fachmann verständlicher Weise sind für jeden Pol, also auch auf der den Folienstreifen 14 gegenüberliegenden Seite und benachbart zu dem konträren Pol, ebenfalls überstehenden Folienstreifen 14 angeordnet, um diese ebenfalls zu kontaktieren.

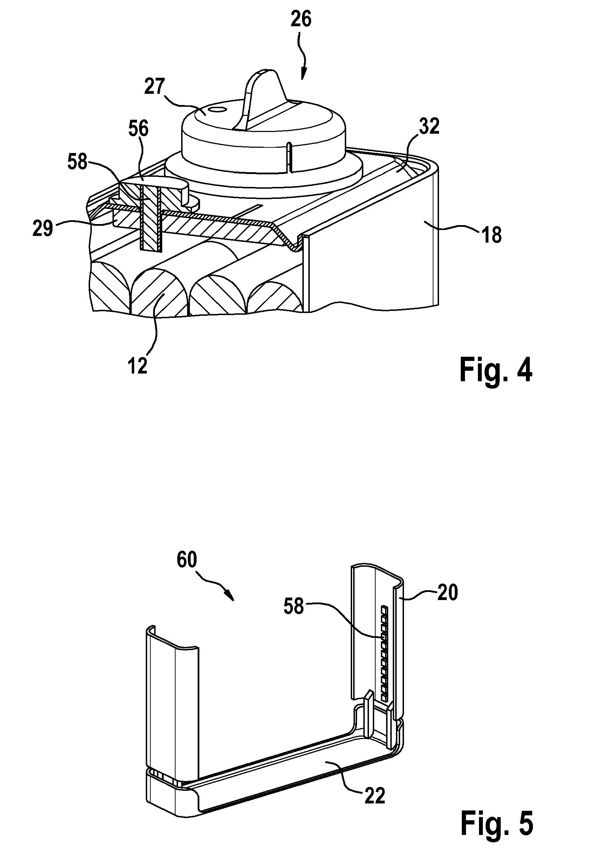

Die Batteriezelle 10 gemäß Figur 1 weist ferner eine auch als NSD (Englisch: Nail Penetration Safety Device) bezeichnete Sicherheitseinrichtung 16 auf. Ferner ist ein Zellgehäuse 18 mit einem Gehäusegrundkörper 19 begrenzend einen Zellraum 23 zum Aufnehmen der Zelleinheit 12 beziehungsweise des Wicklungselements vorgesehen, wobei auf der inneren Seite des Zellgehäuses 18 eine elektrische Isolierung 20 ausgebildet sein kann. In dem Zellgehäuse 18 ist an dem Gehäuseboden ebenfalls eine elektrische Isolierung 22 vorgesehen, wobei die Isolierung 20 und die Isolierung 22 gemeinsam Bestandteil eines elektrischen Isolationselements 60 sein können beziehungsweise dieses ausbilden können, wie dies im Detail in der Figur 5 gezeigt ist. Ferner ist das Zellgehäuse 18 insbesondere mit einem flüssigen Elektrolyt gefüllt.

Zur elektrischen Kontaktierung weist die Batteriezelle 10 ferner zwei hier nur schematisch gezeigte Stromabnehmer beziehungsweise Stromkollektoren 240 auf. Die Stromkollektoren 240 sind jeweils mit einem Anschlussbolzen 26 als elektrischem Kontakt zum mechanischen und elektrischen Kontaktieren des Energiespeichers beziehungsweise der Batteriezelle10 elektrisch verbunden. Weiterhin sind jeweils eine Isolierung 28 für die Zelleinheit 12 und eine Isolierung 30 für den Stromkollektor 240 vorgesehen.

Weiterhin umfasst das Zellgehäuse 18 beziehungsweise ein wannenartiger Bereich desselben eine Gehäuseöffnung 21, welche zumindest teilweise, insbesondere vollständig durch einen Gehäusedeckel etwa aufweisend eine Deckplatte 32 verschließbar ist, zwischen welcher und den Strom kollektoren 240 und insbesondere den Anschlussbolzen 26 umrahmend angeordnet jeweils eine Dichtung 34 und eine als Dichtringisolator ausgestaltete elektrische Isolierung 36 vorgesehen sind. Um beispielsweise bei einem Fehlerfall einen übermäßigen Druck aus dem Zellgehäuse 18 ablassen zu können, ist in der Deckplatte 32 ferner eine Berstscheibe 38 vorgesehen, welche beispielsweise als Berstmembran geprägt oder als ein extra Bauteil angeschweißt sein kann. Die Batteriezelle 10 umfasst ferner eine Membran, wie etwa eine OSD-Membran 40, die in die Deckplatte 32 eingelassen ist. Auf der Deckplatte 32 angeordnet kann ferner eine Deckplattenisolierfolie 42 sein, welche Aussparungen 44 aufweist. Innerhalb der Aussparungen 44 und angeordnet auf der Deckplatte 32 insbesondere benachbart zu den Positionen der Anschlussbolzen 26 sind ferner vorgesehen eine Potentialplatte 46 und eine gegebenenfalls darauf angeordnete Oberplatte 48, welche zusammen mit einer Isolierung 50 auf einer Verbindungsplatte 52 angeordnet sein kann, und ferner unterhalb der Verbindungsplatte 52 einen Abstandsisolator 54, wie dies aus der Figur 1 ersichtlich ist. Ferner ist ein in die Deckplatte 32 eingelassenes Verschlusselement 56 vorgesehen, das eine Einfüllöffnung 33 zum Einfüllen von Elektrolyt verschließen kann.

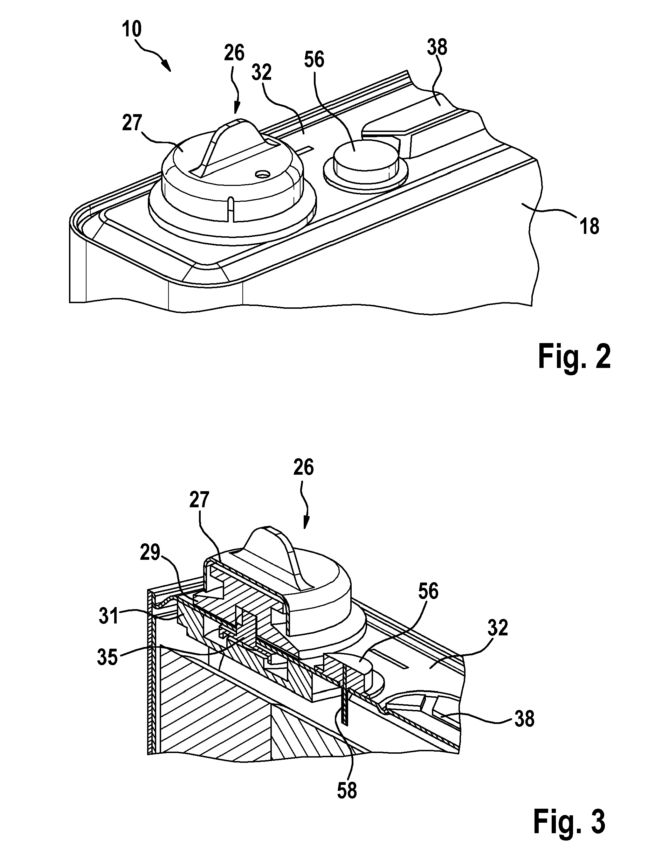

In den Figuren 2 bis 4 ist dabei gezeigt, dass in dem Verschlusselement 56 ein Funktionselement 58 zum Steuern oder Überwachen der Batteriezelle 10 beziehungsweise der Betriebsweise der Batteriezelle 10 vorgesehen ist, welches zumindest teilweise mechanisch verankert und abgedichtet sein kann. Dies kann beispielsweise in Form einer Glas- oder Kunststoffdichtung realisiert sein. Das Funktionselement 56 kann dabei beispielsweise ein elektronisches Bauteil, wie etwa eine Steuereinheit, ein Sensor, wie etwa ein Temperatur- ,Druck-, Beschleunigungs- oder Kraftsensor, oder ein Aktor, insbesondere zum Steuern der der Betriebsweise der Batteriezelle 10, sein.

Die Kernfunktion insbesondere einer Mehrzahl von Funktionselementen 58 kann dabei beispielsweise in einem Verbund der Funktionen liegen derart, dass ein kritischer Zustand erkannt wird und beispielsweise durch einen Schalter darauf reagiert und ein Betriebsparameter angepasst wird. Dies kann beispielsweise realisierbar sein durch ein schnelles oder langsames Entladen der Batteriezelle 10 oder eine einfache Trennung der Batteriezelle 10 aus einem Batteriemodul. Das Funktionselement 58 kann dabei etwa in dem Verschlusselement 56, welches etwa aus einem Metall gefertigt sein kann und in der Öffnung verschweißt sein kann, durch eine Rastverbindung befestigt sein oder dort angeschweißt sein. Der Verschluss der Batteriezelle 10 kann wie bei bisherigen Verschlusselementen beispielsweise Durch Schweißen, Nieten oder Verpressen realisiert werden. Es ist in den Figuren 2 bis 4 insbesondere eine Variante mit in den Füllstopfen beziehungsweise in das Verschlusselement 56 integriertem Funktionselement 58 als Laserschweißlösung dargestellt. Dabei wird das Verschlusselement 56 nach Elektrolytbefüllung in die Befüllöffnung 33 gesteckt und niedergehalten. In diesem Zustand wird am Schweißbund lasergeschweißt und die Batteriezelle 10 beziehungsweise das Zellgehäuse 18 somit verschlossen.

Mit Bezug auf den Anschlussbolzen 26 ist in den Figuren 2 bis 4 ferner gezeigt, dass dieser mit einer Abdeckkappe 27 als Berührschutz versehen sein kann. Ferner gezeigt sind ein Terminal 29, ein Isolator 31 und ein Anschluss 35, an welchem der Terminal 29 angebunden ist.

In den Figuren 5 bis 7 ist eine weitere Ausgestaltung der vorliegenden Erfindung gezeigt, bei welcher ein Funktionselement 58, welches wie gewünscht ausgestaltet sein kann, in dem Isolationselement 60 angeordnet ist. Das Isolationselement 60 kann beispielsweise eine Gehäuseisolierung ausbilden und dabei etwa die an einem Wandbereich des Gehäuses 18 angeordnete Isolierung 20 und die an dem Gehäuseboden angeordnete elektrische Isolierung 22 aufweisen.

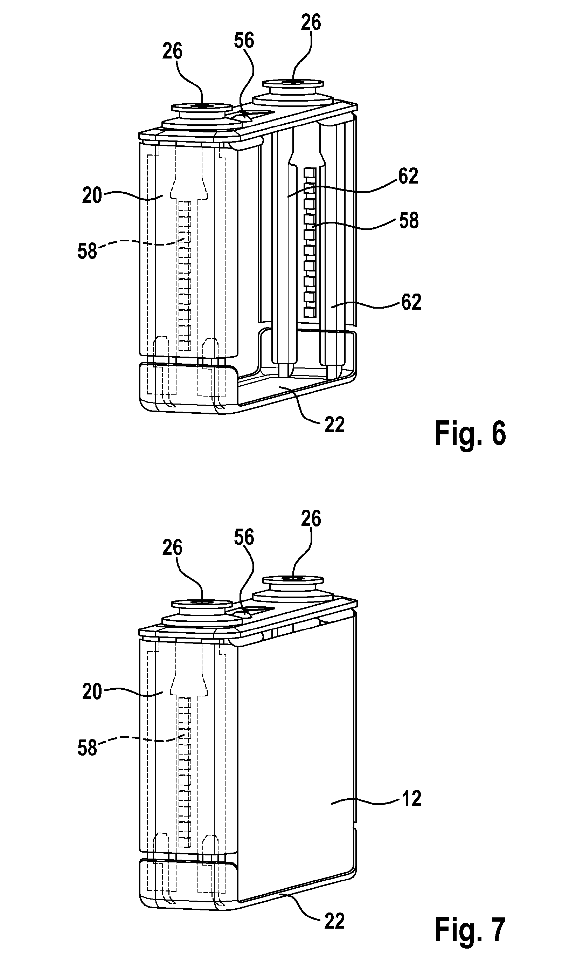

In der Figur 5 ist dabei gezeigt, dass das Funktionselement 58 beispielsweise in der Isolierung 20 des Isolierelements 60 angeordnet sein kann, wobei diese, wie dies in der Figur 6 gezeigt ist, insbesondere zwischen den Stromabnehmern 62 vorliegen kann.

Die Figur 7 zeigt weiterhin, dass die Zelleinheit 12 im Wesentlichen ohne Einschränkungen bezüglich ihrer räumlichen Ausdehnung ausgebildet sein kann beziehungsweise dass in anderen Worten das Funktionselement 58 die Ausdehnung der Zelleinheit 12 nicht begrenzt.

## Patentansprüche

1. Batteriezelle (10), aufweisend ein Zellgehäuse (18), welches Zellgehäuse (18) einen Zellraum (23) zum Aufnehmen einer elektrochemischen Zelleinheit (12) begrenzt, wobei die Batteriezelle (10) in dem Zellraum (23) ein Isolationselement (60) aufweist oder wobei das Zellgehäuse (18) eine mit einem Verschlusselement (56) verschlossene Einfüllöffnung (33) zum Einfüllen eines flüssigen Elektrolyten aufweist, **dadurch gekennzeichnet, dass** ein Funktionselement (58) zum Steuern oder Überwachen der Batteriezelle (10) in dem Verschlusselement (56) oder in dem Isolationselement (60) angeordnet ist.

2. Batteriezelle (10) nach Anspruch 1, **dadurch gekennzeichnet, dass** das Funktionselement (58) wenigstens eines von einem Steuerbauteil, einem Sensor und einem Aktor aufweist.

3. Batteriezelle (10) nach Anspruch 2, **dadurch gekennzeichnet, dass** der Sensor ausgewählt ist aus einem Sensor zum Detektieren von Temperatur, Druck, Kraft und Beschleunigung.

4. Batteriezelle (10) nach Anspruch 2 oder 3, **dadurch gekennzeichnet, dass** das Steuerbauteil zum Steuern der Betriebsweise der Batteriezelle (10) ausgestaltet ist.

5. Batteriezelle (10) nach einem der Ansprüche 2 bis 4, **dadurch gekennzeichnet, dass** der Aktor einen Schalter aufweist.

6. Batteriezelle (10) nach einem der Ansprüche 1 bis 5, **dadurch gekennzeichnet, dass** das Funktionselement (58) fixiert ist durch ein Spritzgussverfahren.

7. Batteriezelle (10) nach einem der Ansprüche 1 bis 6, **dadurch gekennzeichnet, dass** das Funktionselement (58) fixiert ist durch eine Schweißverbindung oder durch eine Rastverbindung.

8. Batteriezelle (10) nach einem der Ansprüche 1 bis 7, **dadurch gekennzeichnet, dass** das Funktionselement (58) durch ein Kabel oder kabellos mit einer insbesondere außerhalb des Zellgehäuses (18) angeordneten Steuereinheit verbunden ist.

9. Batteriezelle (10) nach einem der Ansprüche 1 bis 8, **dadurch gekennzeichnet, dass** das Isolationselement (60) eine Gehäuseisolierung für das Zellgehäuse (18) ist.

10. Batteriezelle (10) nach einem der Ansprüche 1 bis 9, **dadurch gekennzeichnet, dass** die Batteriezelle (10) eine als Wicklungselement ausgestaltete Zelleinheit (12) aufweist.
